# EUROPÄISCHE PATENTSCHRIFT

(11) **EP 1 720 369 B1**
(45) Veröffentlichungstag und Bekanntmachung des Hinweises auf die Patenterteilung: **27.08.2008**
(21) Anmeldenummer: 06113115.7
(22) Anmeldetag: 26.04.2006
(51) Int. Cl.: H04Q 7/36

(54) **Funkkommunikation mit OFDMA und IFDMA**
OFDMA and IFDMA radio communication
Communication radio avec OFDMA et IFDMA

(30) Priorität: 02.05.2005 US 676999 P
(43) Veröffentlichungstag der Anmeldung: 08.11.2006
(73) Patentinhaber: Nokia Siemens Networks GmbH & Co. KG, 81541 München (DE)
(72) Erfinder: Chindapol, Aik, Princeton, 08542 (US); Döttling, Martin, 85579, Neubiberg (DE); Hindelang, Thomas, 82256, Fürstenfeldbruck (DE); Lobinger, Andreas, 83714, Miesbach (DE); Raaf, Bernhard, 82061, Neuried (DE); Viering, Ingo, 81539, München (DE)

(56) Entgegenhaltungen:
- US-A1- 2004 001 429
- US-A1- 2005 034 053
- ZHONGREN CAO ET AL INSTITUTE OF ELECTRICAL AND ELECTRONICS ENGINEERS: "Optimum subcarrier assignment for OFDMA uplink" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, Bd. VOL. 1 OF 2. CONF. 37, 9. November 2003 (2003-11-09), Seiten 708-712, XP010702209 ISBN: 0-7803-8104-1
- FILIPPI A ET AL: "Low complexity interleaved sub-carrier allocation in OFDM multiple access systems" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26. September 2004 (2004-09-26), Seiten 1890-1893, XP010786966 ISBN: 0-7803-8521-7
- SCHNELL M ET AL: "Application of IFDMA to mobile radio transmission" UNIVERSAL PERSONAL COMMUNICATIONS, 1998. ICUPC '98. IEEE 1998 INTERNATIONAL CONFERENCE ON FLORENCE, ITALY 5-9 OCT. 1998, NEW YORK, NY, USA,IEEE, US, Bd. 2, 5. Oktober 1998 (1998-10-05), Seiten 1267-1272, XP010314992 ISBN: 0-7803-5106-1
- FRANK T ET AL: "IFDMA - A Promising Multiple Access Scheme for Future Mobile Radio Systems" PERSONAL, INDOOR AND MOBILE RADIO COMMUNICATIONS, 2005. PIMRC 2005. IEEE 16TH INTERNATIONAL SYMPOSIUM ON BERLIN, GERMANY 11-14 SEPT. 2005, PISCATAWAY, NJ, USA,IEEE, 11. September 2005 (2005-09-11), Seiten 1214-1218, XP010926614 ISBN: 978-3-8007-29

## Beschreibung

Die Erfindung betrifft ein Verfahren zur Kommunikation per Funk, bei welchem zur Kommunikation ein in eine Mehrzahl von Subträgern aufgeteiltes Frequenzband verwendet wird. Weiterhin betrifft die Erfindung einen Sender und einen Empfänger zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen Sender und Empfänger übertragen. Bei diesen Funkstationen kann es sich hierbei je nach konkreter Ausgestaltung des Funkkommunikationssystems um verschiedenartige Teilnehmerstationen oder netzseitige Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Um eine möglichst effiziente Übertragung von Daten zu erreichen, zerlegt man das gesamte zur Verfügung stehende Frequenzband in mehrere Subträger (Multicarrier- bzw. Mehrträgerverfahren). Die diesen FDMA-Verfahren zugrunde liegende Idee ist es, das Ausgangsproblem der Übertragung eines breitbandigen Signals in die Übertragung mehrerer schmalbandiger Signale zu überführen. Dies hat u.a. den Vorteil, dass die am Empfänger erforderliche Komplexität reduziert werden kann. Ferner ermöglicht die Aufteilung der verfügbaren Bandbreite in mehrere schmalbandige Subträger eine deutlich höhere Granularität der Funkressourcen, d.h., die Funkressourcen können mit einer großen Feinheit auf die zu übertragenden Daten bzw. auf die Teilnehmerstationen verteilt werden. Insbesondere bei Übertragungen mit variabler Datenrate oder bei burstartigem Datenverkehr kann die verfügbare Bandbreite durch die Zuweisung von Subträgern an unterschiedliche Teilnehmerstationen effizient ausgenutzt werden.

Ein Beispiel für ein Mehrträgerübertragungsverfahren ist OFDM (Orthogonal Frequency Division Multiplexing) System, bei welchem für die Subträger zeitlich annähernd rechteckige Pulsformen verwendet werden. Der Frequenzabstand der Subträger wird derart gewählt, dass im Frequenzraum bei derjenigen Frequenz, bei welcher das Signal eines Subträgers ausgewertet wird, die Signale der anderen Subträger einen Nulldurchgang aufweisen. Somit sind die Subträger orthogonal zueinander. Durch den meist sehr geringen Abstand der Subträger und der Schmalbandigkeit der auf den einzelnen Subträger übertragenen Signale bei OFDM soll gewährleistet werden, dass die Übertragung innerhalb der einzelnen Subträger im allgemeinen nicht frequenzselektiv ist. Dies vereinfacht am Empfänger die Signalentzerrung.

Aus der US 2004/0001429 sind ein Wireless Terminal und ein Netzwerk Terminal bekannt, um ein neues Uplink OFDM Protokoll zu implementieren. In dem neuen Protokoll hat das Wireless Terminal eine erste Übertragungskette zum Erzeugen und Übertragen einer OFDM Übertragung mit niedriger Rate und eine zweite Übertragungskette zum Erzeugen und Übertragen einer Übertragung im Stoßbetrieb in einem zweiten Frequenzband des OFDM Bandes.

Aus der US 2005/0034053 ist ein Apparat bekannt, welcher ein Interface einer OFDM physikalischen Schicht aufweist. An das Interface kann ein adaptiver Subträger-Demodulator oder ein adaptiver Subträger-Modulator gekoppelt werden, um ein adaptives Bitloaden zu implementieren.

Der Erfindung liegt die Aufgabe zugrunde, ein Verfahren zur Kommunikation per Funk aufzuzeigen, wobei ein in eine Mehrzahl von Subträgern aufgeteiltes Frequenzband zur Verfügung steht. Weiterhin sollen Vorrichtungen zur Durchführung des Verfahrens vorgestellt werden.

Diese Aufgabe wird durch ein Verfahren mit den Merkmalen des Anspruchs 1 und durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemässen Verfahren zur Kommunikation per Funk wird ein in eine Mehrzahl von Subträgern aufgeteiltes Frequenzband verwendet. Nachrichten werden von einer Basisstation zu einer Teilnehmerstation und/oder von der Teilnehmerstation zu der Basisstation gesendet. Zeitweise werden Nachrichten unter Verwendung eines ersten FDMA-Verfahrens verarbeitet, und zeitweise werden Nachrichten unter Verwendung eines zweiten FDMA-Verfahrens verarbeitet.

Bei der Basisstation handelt es sich um eine netzseitige Einrichtung eines Funkkommunikationssystems, beispielsweise eines zellularen oder eines lokalen Systems. Es ist möglich, dass die Basisstation die einzige netzseitige Funkstation des Funkkommunikationssystems darstellt, oder dass weitere netzseitige Funkstationen existieren, deren Funkabdeckungsbereiche gegebenenfalls an den Funkabdeckungsbereiche der Basisstation grenzen. Die Teilnehmerstation kann mobil oder stationär ausgebildet sein. Zwischen der Basisstation und der Teilnehmerstation erfolgt eine Kommunikation, wobei es sich hierbei um eine Kommunikation in Aufwärtsrichtung (englisch: Uplink) und/oder in der Abwärtsrichtung (englisch: Downlink) handeln kann.

Für die Kommunikation zwischen der Basisstation und der Teilnehmerstation wird zeitweise ein erstes FDMA-Verfahren, wie beispielsweise OFDMA (Orthogonal Frequency Division Multiple Access), und zeitweise ein zweites FDMA-Verfahren, wie beispielsweise IFDMA (Interleaved Frequency Division Multiple Access), verwendet. Sowohl das erste als auch das zweite FDMA-Verfahren kann mit anderen Vielfachzugriffsverfahren kombiniert werden, z.B. mit kodebasierten Vielfachzugriffsverfahren.

Für die Kommunikation steht in dem betrachteten Funkkommunikationssystem ein in mehrere Subträger untergliedertes Frequenzband zur Verfügung. Die Aufteilung des Frequenzbandes in die Subträger ist für die Übertragung über das erste FDMA-Verfahren und für die Übertragung über das zweite FDMA-Verfahren die gleiche. Es können jedoch unterschiedliche Subträger des Frequenzbandes für die beiden FDMA-Verfahren eingesetzt werden. Alternativ hierzu ist es möglich, dass zumindest manche Subträger zeitweise für das erste FDMA-Verfahren und zeitweise für das zweite FDMA-Verfahren eingesetzt werden. Die Subträger können gegebenenfalls von der Basisstation oder von einer mit der Basisstation verbundenen netzseitigen Einrichtung für die Kommunikation mit Teilnehmerstationen umkonfigurieren, d.h. die Zuweisung der Subträger zu den FDMA-Verfahren kann verändert werden.

Die beiden FDMA-Verfahren werden für die Kommunikation zwischen der Basisstation und der Teilnehmerstation nicht gleichzeitig, sondern nacheinander eingesetzt. Es existiert im Rahmen der Kommunikation zwischen der Basisstation und der Teilnehmerstation zumindest eine Nachricht, welche sowohl von dem Sender als auch von dem Empfänger gemäß dem ersten FDMA-Verfahren verarbeitet wird, und zumindest eine andere Nachricht, welche sowohl von dem Sender als auch von dem Empfänger gemäß dem zweiten FDMA-Verfahren verarbeitet wird. Dies bedeutet, dass eine Umschaltung zwischen den beiden FDMA-Kommuniationen erfolgt. Diese Umschaltung findet vorzugsweise während einer laufenden Verbindung zwischen der Basisstation und der Teilnehmerstation statt. Während die Teilnehmerstation somit zu einem Zeitpunkt genau eines der FDMA-Verfahren verwendet, kann die Basisstation zur Kommunikation mit verschiedenen Teilnehmerstationen gleichzeitig beide FDMA-Verfahren anwenden.

In Weiterbildung der Erfindung sendet die Basisstation der Teilnehmerstation Signalisierungsinformationen als Aufforderung zum Wechsel von dem ersten FDMA-Verfahren zu dem zweiten FDMA-Verfahren oder von dem zweiten FDMA-Verfahren zu dem ersten FDMA-Verfahren. Die Entscheidung darüber, dass die Signalisierungsinformationen an die Teilnehmerstation zu versenden sind bzw. über den Inhalt der Signalisierungsinformationen, wird vorzugsweise von der Basisstation oder von einer mit der Basisstation verbundenen netzseitigen Einrichtung getroffen.

Einer vorteilhaften Weiterbildung der Erfindung gemäß wird eine Entscheidung über die Verwendung des FDMA-Verfahrens unter Verwendung von mindestens einem Messergebnis getroffen. Die Entscheidung wird vorzugsweise von der Basisstation oder von einer mit der Basisstation verbundenen netzseitigen Einrichtung getroffen. Alternativ kann die Entscheidung auch von der Teilnehmerstation getroffen werden. Bei dem mindestens einen Messergebnis kann es sich um das Ergebnis einer oder mehrerer Messungen der Teilnehmerstation und/oder einer oder mehrerer Messungen der Basisstation handeln.

Vorzugsweise betrifft das mindestens eine Messergebnis eine Funkkanalqualität betreffend mindestens einen Subträger, wie beispielsweise eine Signalstärke bei Versendung oder Empfang für einen oder mehrere für die Kommunikation zwischen der Basisstation und der Teilnehmerstation aktuell verwendete oder nicht verwendete Subträger. Zusätzlich oder alternativ kann das mindestens eine Messergebnis ein Peak-zu-Average-Verhältnis der Teilnehmerstation betreffen. Zusätzlich oder alternativ kann das mindestens eine Messergebnis eine Interferenzsituation der Teilnehmerstation betreffen, wie beispielsweise die von der Teilnehmerstation durch benachbarte Basisstationen erfahrene Interferenz oder die von der Teilnehmerstation verursachte Interferenz für benachbarte Basisstationen. Zusätzlich oder alternativ kann das mindestens eine Messergebnis einen Aufenthaltsort der Teilnehmerstation betreffen, wie beispielsweise den Abstand der Teilnehmerstation von der Basisstation oder den Aufenthaltsort der Teilnehmerstation innerhalb des Funkabdeckungsbereiches der Basisstation.

Einer Ausgestaltung der Erfindung gemäß wird von der Basisstation zur Kommunikation mit Teilnehmerstationen für das erste FDMA-Verfahren ein erster Teil der Subträger und für das zweite FDMA-Verfahren ein zweiter mit dem ersten Teil nicht überlappender Teil der Subträger des Frequenzbandes verwendet, wobei der erste Teil mehrere im Frequenzbereich äquidistante aus der gleichen Anzahl von Subträgern bestehende Blöcke von Subträgern umfasst. Gemäß dieser Ausgestaltung werden von der Basisstation manche Subträger für das erste FDMA-Verfahren und andere Subträger für das zweite FDMA-Verfahren verwendet, wobei keine Überschneidung zwischen den Subträgern des ersten und des zweiten FDMA-Verfahrens vorhanden ist. Nicht alle der Subträger des ersten FDMA-Verfahrens sind benachbart zueinander, vielmehr existiert eine Mehrzahl von gleich großen Blöcken von Subträgern des ersten FDMA-Verfahrens.

Vorteilhaft ist es, wenn von der Basisstation zur Kommunikation mit Teilnehmerstationen ein erster Teil der Subträger und ein zweiter mit dem ersten Teil nicht überlappender Teil der Subträger des Frequenzbandes verwendet wird, und von einer zu der Basisstation benachbarten Basisstation zur Kommunikation mit Teilnehmerstationen zumindest manche der Subträger des ersten Teils und ein dritter mit dem ersten und dem zweiten Teil nicht überlappender Teil der Subträger des Frequenzbandes verwendet wird. Hierbei grenzen die Funkzellen bzw. Funkabdeckungsbereiche der beiden Basisstationen aneinander. Die beiden Basisstationen verwenden zumindest manche der Subträger gemeinsam, während andere Subträger existieren, welche entweder von der Basisstation oder von der ihr benachbarten Basisstation verwendet werden.

Vorteilhaft ist es ferner, wenn von der Basisstation zur Kommunikation mit Teilnehmerstationen für das erste FDMA-Verfahren der erste Teil der Subträger und für das zweite FDMA-Verfahren der zweite Teil der Subträger des Frequenzbandes verwendet wird, und von der zu der Basisstation benachbarten Basisstation zur Kommunikation mit Teilnehmerstationen für das erste FDMA-Verfahren zumindest manche der Subträger des ersten Teils und für das zweite FDMA-Verfahren der dritte mit Teil der Subträger des Frequenzbandes verwendet wird. Die beiden Basisstationen verwenden zumindest manche der Subträger des ersten FDMA-Verfahrens gemeinsam, während zwischen den von der benachbarten Basisstation verwendeten Subträgern des zweiten FDMA-Verfahrens und den von der Basisstation verwendeten Subträgern des ersten und des zweiten FDMA-Verfahrens keine Überschneidung vorhanden ist.

Der erfindungsgemäße Sender für ein Funkkommunikationssystem weist Mittel auf zum Verarbeiten von ersten zu versendenden Nachrichten unter Verwendung eines ersten FDMA-Verfahrens und zum Verarbeiten von zweiten zu versendenden Nachrichten unter Verwendung eines zweiten FDMA-Verfahrens, wobei die Verarbeitung der ersten Nachrichten unter Verwendung des ersten FDMA-Verfahrens gleichzeitig zu oder vor oder nach der Verarbeitung der zweiten Nachrichten unter Verwendung des zweiten FDMA-Verfahrens erfolgt, sowie Mittel zum Versenden der unter Verwendung des ersten und/oder des zweiten FDMA-Verfahrens verarbeiteten Nachrichten an einen Empfänger.

Der erfindungsgemäße Empfänger für ein Funkkommunikationssystem weist Mittel auf zum Empfangen von Nachrichten von einem Sender, sowie Mittel zum Verarbeiten von ersten empfangenen Nachrichten unter Verwendung eines ersten FDMA-Verfahrens und zum Verarbeiten von zweiten empfangenen Nachrichten unter Verwendung eines zweiten FDMA-Verfahrens, wobei die Verarbeitung der ersten Nachrichten unter Verwendung des ersten FDMA-Verfahrens gleichzeitig zu oder vor oder nach der Verarbeitung der zweiten Nachrichten unter Verwendung des zweiten FDMA-Verfahrens erfolgt.

Der erfindungsgemäße Sender und der erfindungsgemäße Empfänger eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel aufweisen. Insbesondere können Mittel vorhanden sein zum Umschalten der Nachrichtenverarbeitung zwischen den beiden FDMA-Verfahren, gegebenenfalls auf Aufforderung.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: eine erfindungsgemäße Verwendung eines Frequenzbandes,
- Figur 3:: ein Ablaufdiagramm zum erfindungsgemäßen Verfahren,
- Figur 4:: einen erfindungsgemäßen Sender und einen erfindungsgemäßen Empfänger.

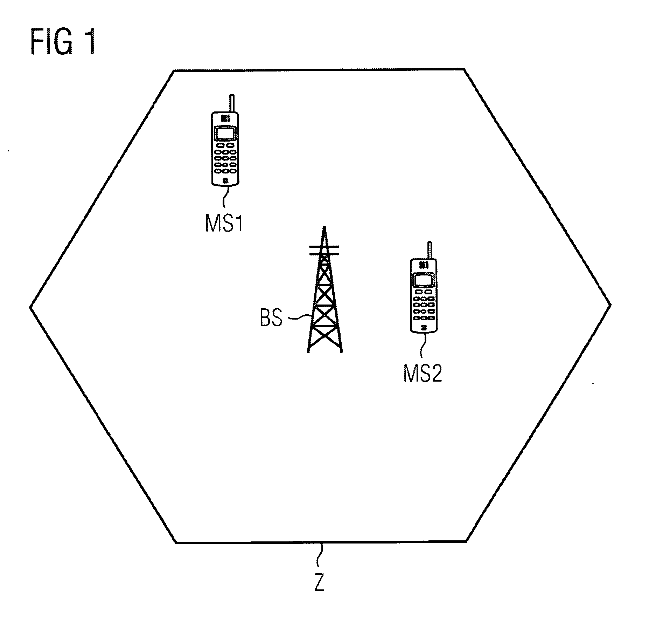

Der in Figur 1 dargestellte Ausschnitt aus einem Funkkommunikationssystem zeigt den Funkversorgungsbereich bzw. die Funkzelle Z einer Basisstation BS, in welcher sich die Teilnehmerstationen MS1 und MS2 befinden. Bei dem Funkkommunikationssystem handelt es sich vorzugsweise um ein zellulares System, alternativ kann es sich bei der Basisstation BS um eine netzseitige Funkeinrichtung eines lokalen Funkkommunikationssystems handeln. Weitere netzseitige Einrichtungen des Funkkommunikationssystem sind der Übersichtlichkeit halber nicht in Figur 1 dargestellt.

Gemäß der Erfindung werden für die Kommunikation zwischen der Basisstation BS und den Teilnehmerstationen MS1 und MS2 das IFDMA (Interleaved Frequency Division Multiple Access) und das OFDMA (Orthogonal Frequency Division Multiple Access) Verfahren eingesetzt. Beide Übertragungsverfahren verwenden schmalbandige Subträger eines Frequenzbandes zur Signalübertragung. Bei OFDMA können einer Teilnehmerstation beliebige Subträger zugewiesen werden, z.B. bei "frequency domain scheduling" OFDMA einer oder mehrere Blöcke benachbarter Subträger oder bei "random tone allocation" OFDMA nach einem Zufallsalgorithmus ausgewählte Subträger mit beliebigem Frequenzabstand. Bei IFDMA hingegen weisen die einer Teilnehmerstation zugewiesenen Subträger einen konstanten Frequenzabstand auf, d.h. einer Teilnehmerstation wird jeder n-te Subträger zugewiesen. Je geringer dieser Frequenzabstand ist, desto höher ist die einer Teilnehmerstation maximal zur Verfügung stehende Datenrate.

IFDMA wird beispielsweise in den folgenden Dokumenten beschrieben:
U. Sorger: "Interleaved FDMA", Spread-Spectrum Workshop, DLR Oberpfaffenhofen, Oktober 1996.
M. Schnell, I. De Broeck, U. Sorger: "A Promising New Wideband Multiple-Access Scheme for Future Mobile Communications Systems", European Transactions on Telecommunications (ETT), Vol 10, No. 4, Juli/August 1999, pp. 417-427.

OFDMA wird beispielsweise in den folgenden Dokumenten beschrieben:
S. Pietrzyk, G.J.M. Janssen. "Multiuser subcarrier allocation for QoS provision in the OFDMA systems", IEEE VTC Spring 2002, Vancouver, Canada.
D. Kivanc, G. Li, H. Liu: "Computationally efficient bandwidth allocation and power control for OFDMA", IEEE Transactions on Wireless Communications, vol. 2, no. 6, pp. 1150-1158, 2003.

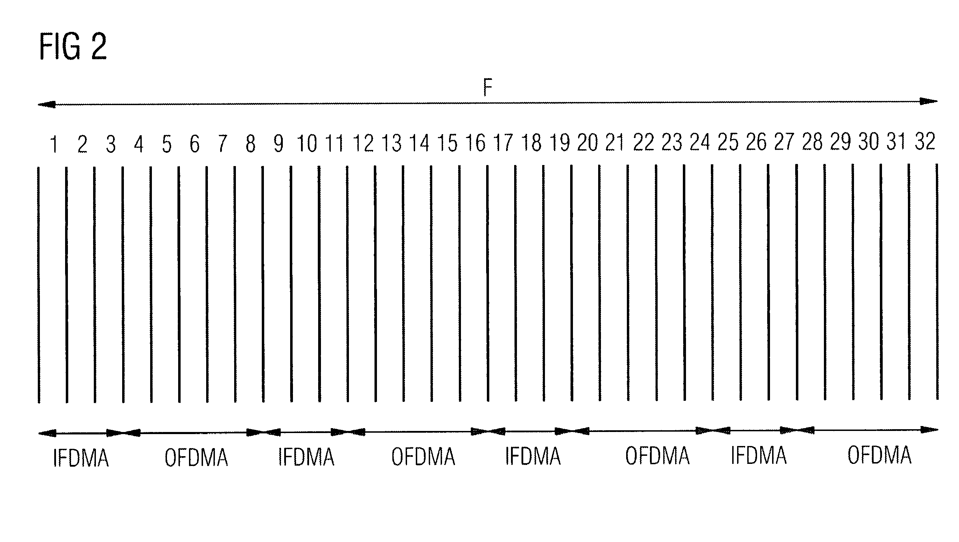

Figur 2 zeigt ein von der Basisstation BS zur Kommunikation mit Teilnehmerstationen verwendetes Frequenzband F, welches in 32 äquidistante Subträger, nummeriert mit den Zahlen 1 bis 32, aufgeteilt ist. Die Subträger 1 bis 3, 9 bis 11, 17 bis 19 und 25 bis 27 werden zur Kommunikation unter Verwendung von IFDMA eingesetzt, die anderen Subträger 4 bis 8, 12 bis 16, 20 bis 24 und 28 bis 32 zur Kommunikation unter Verwendung von OFDMA. Diese Zuordnung der Subträger zu OFDMA bzw. IFDMA kann sowohl für die Nachrichtenübertragung in Aufwärts- als auch in Abwärtsrichtung gültig sein. Alternativ ist es möglich, dass für die Aufwärts- und die Abwärtsrichtung unterschiedliche Subträger den beiden Übertragungsverfahren zugeordnet werden. Jeder der Subträger wird ausschließlich für eines der Übertragungsverfahren eingesetzt. Zur Kommunikation unter Verwendung von IFDMA können einer Teilnehmerstation beispielsweise die Subträger 1 und 17 zugewiesen werden, oder die Subträger 3, 11, 19 und 27. Zur Kommunikation unter Verwendung von OFDMA können einer Teilnehmerstation beispielsweise die Subträger 4 bis 8 oder die Subträger 7, 20 und 24 zugewiesen werden.

Alternativ zu der in Figur 2 dargestellten Aufteilung des Frequenzbandes F in jeweils mehrere Bereiche mit OFDMA-Subträgern und IFDMA-Subträgern kann eine Aufteilung auch derart vorgenommen werden, dass jeweils ein Bereich mit OFDMA-Subträgern und ein Bereich mit IFDMA-Subträgern vorliegt. So können beispielsweise die Subträger 1 bis 10 für IFDMA und die restlichen Subträger 11 bis 32 für OFDMA verwendet werden.

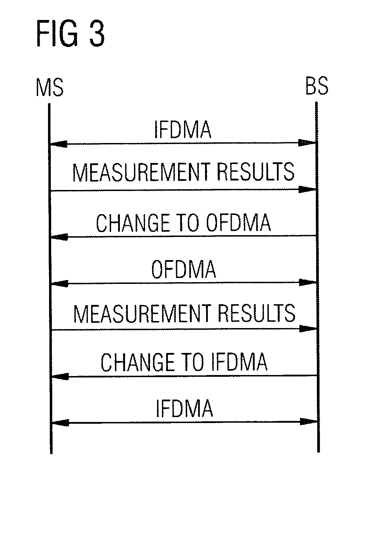

Figur 3 zeigt den Ablauf eines erfindungsgemäßen Verfahrens, bei welchem eine Teilnehmerstation MS und eine Basisstation BS miteinander kommunizieren. Zu Beginn erfolgt eine Kommunikation IFDMA unter Verwendung von IFDMA, wobei es sich hierbei um eine Nachrichtenversendung in Aufwärts- und/oder Abwärtsrichtung handeln kann. Es folgt der optionale Schritt der Versendung einer Nachricht MEASUREMENT RESULTS von der Teilnehmerstation MS an die Basisstation BS. Die Nachricht MEASUREMENT RESULTS enthält Ergebnisse von von der Teilnehmerstation MS durchgeführten Messungen, welche später genauer erläutert werden. Die Versendung der Nachricht MEASUREMENT RESULTS durch die Teilnehmerstation MS erfolgt vorzugsweise periodisch. Die Basisstation BS oder eine mit der Basisstation BS verbundene netzseitige Einrichtung entscheidet, dass in Bezug auf die Teilnehmerstation MS von der Kommunikation IFDMA unter Verwendung von IFDMA zu einer Kommunikation OFDMA unter Verwendung von OFDMA gewechselt werden soll. Die Basisstation BS sendet der Teilnehmerstation MS eine Nachricht CHANGE TO OFDMA, welche die Teilnehmerstation MS anweist, bei der Verarbeitung von von der Basisstation BS empfangenen Nachrichten und/oder bei der Versendung von Nachrichten an die Basisstation BS im folgenden OFDMA zu verwenden. Im Anschluss erfolgt eine Kommunikation OFDMA unter Verwendung von OFDMA, wobei es sich hierbei um eine Nachrichtenversendung in Aufwärts- und/oder Abwärtsrichtung handeln kann. Erneut findet der optionale Verfahrensschritt der Versendung einer Nachricht MEASUREMENT RESULTS mit Messergebnissen der Teilnehmerstation MS an die Basisstation BS statt. Die Basisstation BS oder eine mit der Basisstation BS verbundene netzseitige Einrichtung entscheidet, dass in Bezug auf die Teilnehmerstation MS von der Kommunikation OFDMA unter Verwendung von OFDMA zu einer Kommunikation IFDMA unter Verwendung von IFDMA gewechselt werden soll. Die Basisstation BS sendet der Teilnehmerstation MS eine Nachricht CHANGE TO IFDMA, welche die Teilnehmerstation MS anweist, bei der Verarbeitung von von der Basisstation BS empfangenen Nachrichten und/oder bei der Versendung von Nachrichten an die Basisstation BS im folgenden IFDMA zu verwenden. Im Anschluss erfolgt eine Kommunikation IFDMA unter Verwendung von IFDMA, wobei es sich hierbei um eine Nachrichtenversendung in Aufwärts- und/oder Abwärtsrichtung handeln kann.

Die Entscheidung der Basisstation BS oder einer mit der Basisstation BS verbundenen netzseitigen Einrichtung über das zu verwendende Übertragungsverfahren kann aufgrund von Messergebnissen der Nachricht MEASUREMENT RESULTS getroffen werden. Zusätzlich oder alternativ zu von der Teilnehmerstation MS ermittelten Messergebnissen kann die Entscheidung unter Verwendung von von der Basisstation BS ermittelten Messergebnissen getroffen werden.

Somit kommuniziert die Basisstation BS mit der Teilnehmerstation MS zeitweise über das Übertragungsverfahren IFDMA und zeitweise über das Übertragungsverfahren OFDMA. Eine Umschaltung zwischen den beiden Verfahren erfolgt auf eine Signalisierungsnachricht der Basisstation BS hin. Die Entscheidung über den Wechsel zwischen den Übertragungsverfahren wird netzseitig getroffen. Der Wechsel zwischen IFDMA und OFDMA ist teilnehmerstations-spezifisch, so dass zu einem bestimmten Zeitpunkt sowohl Teilnehmerstationen vorhanden sein können, welche über IFDMA mit der Basisstation BS kommunizieren, als auch Teilnehmerstationen, welche über OFDMA mit der Basisstation BS kommunizieren. Während somit die Teilnehmerstation MS zu einem Zeitpunkt zur Verarbeitung von zu versenden oder empfangenen Nachrichten lediglich eines der Übertragungsverfahren, d.h. entweder IFDMA oder OFDMA, anwendet, verwendet die Basisstation BS gleichzeitig die beiden Verfahren, d.h. manche der von der Basisstation BS zu versendenden Nachrichten werden unter Verwendung von OFDMA verarbeitet, und gleichzeitig werden andere von der Basisstation BS zu versendende Nachrichten unter Verwendung von IFDMA verarbeitet, bzw. manche der von der Basisstation BS empfangenen Nachrichten werden unter Verwendung von OFDMA verarbeitet, und gleichzeitig werden andere von der Basisstation BS empfangene Nachrichten unter Verwendung von IFDMA verarbeitet.

Bei einer paketorientierten Kommunikation zwischen der Teilnehmerstation MS und der Basisstation BS sind der Teilnehmerstation MS Subträger nicht durchgehend zugewiesen, sondern lediglich zur Übertragung eines Paketes. Zwischen verschiedenen Paketen können die Subträger für die Paketübertragung zwischen der Basisstation BS und anderen Teilnehmerstationen verwendet werden. Die Zuweisung von Subträgern zu Teilnehmerstationen erfolgt vorzugsweise schnell gegenüber der Zuweisung von Übertragungsverfahren zu Teilnehmerstationen, da die Entscheidung über das zu verwendende Übertragungsverfahren von Faktoren wie z.B. der aktuelle Interferenzsituation abhängen kann, welche sich langsam gegenüber der Dauer der Übertragung eines Paketes ändern. Durch eine getrennte Signalisierung des Übertragungsverfahrens und der Subträgerzuweisung werden Funkressourcen eingespart, da die Signalisierung des zu verwendenden Übertragungsverfahrens selten gegenüber der Signalisierung der Subträgerzuweisung erfolgen kann. Weiterhin wird der Signalisierungsaufwand für die Subträgerzuweisung durch eine vorhergehende Signalisierung des Übertragungsverfahrens reduziert, da lediglich eine Untermenge der Subträger für das jeweilige Übertragungsverfahren zur Verfügung stehen.

Der Wechsel zwischen OFDMA und IFDMA erfolgt in Abhängigkeit von Messergebnissen, wobei es sich hierbei um von der von dem Wechsel betroffenen Teilnehmerstation und/oder von der Basisstation durchgeführte Messungen handeln kann. Vorzugsweise betreffen die Messungen die Kanalqualität eines Funkkanals zwischen der betreffenden Teilnehmerstation und der Basisstation. Die Messungen beziehen sich auf einen oder mehrere Subträger. So können die Messungen an aktuell der Teilnehmerstation zugewiesenen Subträgern erfolgen, um Informationen über einen aktuell verwendeten Funkkanal zu gewinnen. Zusätzlich oder alternativ können Messungen an aktuell nicht der Teilnehmerstation zugewiesenen Subträgern erfolgen, so dass Informationen über die Qualität eines potentiellen zukünftigen Funkkanals gewonnen werden können.

Beispiele für Messungen betreffend eine Kanalqualität sind die Empfangsstärke von Signalen der Teilnehmerstation in der Basisstation, oder die Empfangsstärke von Signalen der Basisstation in der Teilnehmerstation, oder die Sendeleistung der Versendung von Nachrichten von der Teilnehmerstation an die Basisstation, oder die Sendeleistung der Versendung von Nachrichten von der Basisstation an die Teilnehmerstation. Besonders eignen sich Messungen, welche u.a. zur Entscheidung über die Durchführung eines Handovers, insbesondere eines Soft-Handovers, durchgeführt werden. Alternativ oder zusätzlich können die Messungen die Interferenzsituation betreffen, welche die Teilnehmerstation durch benachbarte Funkzellen erfährt. Zur Bestimmung dieser Größe misst die Teilnehmerstation die Empfangsleistung von von anderen Basisstationen ausgestrahlten Signalen. Zur Ermittlung einer geeigneten Größe als Entscheidungskriterium, ob eine Kommunikation über OFDMA oder über IFDMA erfolgen soll, können verschiedene Messungen bzw. die jeweiligen Ergebnisse kombiniert werden. Eine Berechnung dieser Größe(n) kann von der betroffenen Teilnehmerstation oder von der Basisstation durchgeführt werden.

Ergeben die Messungen, dass die Kommunikation über die aktuell einer Teilnehmerstation zugewiesenen Subträger des einen Übertragungsverfahrens nachteilig ist, z.B. weil der Funkkanal schlecht ist oder weil zu große Interferenz von Nachbarzellen auf diesen Subträgern vorhanden ist, und/oder ergeben die Messungen, dass die Kommunikation über aktuell nicht der Teilnehmerstation zugewiesene Subträger des anderen Übertragungsverfahrens vorteilhaft bzw. gegebenenfalls vorteilhafter ist, so kann netzseitig entschieden werden, von dem ersten zu dem zweiten Übertragungsverfahren zu wechseln. Beispielsweise kann einer Teilnehmerstation ein Block von Subträgern zur Kommunikation mit OFDMA zugewiesen sein, und durch die Messungen festgestellt werden, dass für IFDMA verwendete verteilte Subträger geeigneter wären, so dass aufgrund dieser Messungen ein Wechsel von OFDMA zu IFDMA erfolgt.

Der Wechsel von OFDMA zu IFDMA oder umgekehrt kann insbesondere durch den Aufenthaltsort einer Teilnehmerstation innerhalb des Funkabdeckungsbereichs einer Basisstation bedingt sein. Gemäß Figur 1 befindet sich die Teilnehmerstation MS1 aktuell in der Nähe des Randes des Funkversorgungsbereichs Z der Basisstation BS, während sich die Teilnehmerstation MS2 aktuell in der Nähe der Basisstation BS aufhält. Aufgrund dieser unterschiedlichen Entfernung der Teilnehmerstationen MS1 und MS2 von der Basisstation BS liegen für die Teilnehmerstationen MS1 und MS2 unterschiedliche Bedingungen hinsichtlich der Funkübertragung vor. In Abwärtsrichtung, d.h. in Bezug auf die Übertragung von der Basisstation BS zu einer Teilnehmerstation MS1 oder MS2, ist für Teilnehmerstationen mit großem Abstand zur eigenen Basisstation BS ein großer Pfadverlust vorhanden. Außerdem erfahren diese Teilnehmerstationen mehr Interferenz von gegebenenfalls vorhandenen benachbarten Basisstationen als Teilnehmerstationen in der Nähe der eigenen Basisstation. In Aufwärtsrichtung, d.h. in Bezug auf die Übertragung von einer Teilnehmerstation MS1 oder MS2 zu der Basisstation BS, ist für Teilnehmerstationen mit großem Abstand zur eigenen Basisstation BS ebenfalls ein größerer Pfadverlust vorhanden. Außerdem erzeugen diese Teilnehmerstationen mehr Interferenz für gegebenenfalls vorhandene benachbarte Basisstationen, d.h. sie erhöhen die Interzellinterferenz.

Weiterhin ist das Peak-zu-Average-Verhältnis, d.h. das Verhältnis der Sendeleistung bei einem Sendeleistungs-Peak zu der mittleren Sendeleistung einer Teilnehmerstation, für Teilnehmerstationen mit großer Entfernung zur eigenen Basisstation BS wichtiger als für Teilnehmerstationen mit kleiner Entfernung zur eigenen Basisstation BS, da weiter entfernte Teilnehmerstationen häufig mit maximaler Sendeleistung strahlen. Das Peak-zu-Average-Verhältnis darf für weit von der eigenen Basisstation BS entfernte Teilnehmerstationen nicht zu groß werden, da -aufgrund der für eine Teilnehmerstation maximal erreichbaren Sendeleistung- bei hoher Sendeleistung und hohem Peak-zu-Average-Verhältnis nicht ausreichend Sendeleistung für die Peaks zur Verfügung steht.

Weiterhin ist für Teilnehmerstationen in der Nähe der Grenze zwischen den Funkzellen zweier Basisstationen der Frequenzwiederholabstand von großer Bedeutung: bei einem Frequenzwiederholabstand von 1 werden in benachbarten Funkzellen die gleichen Funkfrequenzen verwendet. Kommuniziert eine Teilnehmerstation auf einem Subträger, welcher mit einem Frequenzwiederholabstand 1 eingesetzt wird, so erfährt die Teilnehmerstation starke Interferenz aus der Nachbarzelle bzw. führt starke Interferenz in der Nachbarzelle herbei.

Aufgrund der erläuterten unterschiedlichen Situationen, in welchen sich Teilnehmerstationen in der Nähe der Basisstation einerseits und Teilnehmerstationen am Rand des Funkabdeckungsbereiches der Basisstation andererseits befinden, ist es vorteilhaft, für diese Teilnehmerstationen unterschiedliche Übertragungsverfahren zu verwenden. So eignet sich die Verwendung von IFDMA für Teilnehmerstationen, welche eine große Entfernung zu ihrer Basisstation aufweisen, und die Verwendung von OFDMA für Teilnehmerstationen, welche sich in der Nähe ihrer Basisstation befinden. Dies ist insbesondere vorteilhaft, da die Verwendung von IFDMA in einem niedrigen Peak-to-Average-Verhältnis resultiert. Demgemäß können die Subträger 1 bis 3, 9 bis 11, 17 bis 19 und 25 bis 27 der Figur 2 zur Kommunikation von Teilnehmerstationen am Rande einer Funkzelle eingesetzt werden, und die anderen Subträger 4 bis 8, 12 bis 16, 20 bis 24 und 28 bis 32 zur Kommunikation von Teilnehmerstationen in der restlichen Funkzelle. Auf diese Weise hängt die Art des Übertragungsverfahrens von dem Aufenthaltsort einer Teilnehmerstation bzw. von der Entfernung einer Teilnehmerstation von der eigenen Basisstation ab.

Die Entscheidung darüber, ob sich eine Teilnehmerstation am Rand einer Funkzelle oder in der Nähe der Basisstation der Funkzelle befindet, kann durch Messungen von Teilnehmerstationen und/oder von Basisstationen getroffen werden. Hierbei kann beispielsweise eine direkte Ortsbestimmung erfolgen, wie GPS (Global Positioning System), AGPS (Assisted Global Positioning System), Messungen von Signallaufzeiten zur Ortsbestimmung oder andere Ortsbestimmungsverfahren. Es ist auch möglich, nicht direkt den Ort einer Teilnehmerstation zu bestimmen, sondern die oben genannten Messungen der Kanalqualität und/oder Interferenzsituation durchzuführen, welche indirekt Aussagen über den Aufenthaltsort einer Teilnehmerstation liefern, da eine Teilnehmerstation mit steigender Entfernung zur eigenen Basisstation in der Regel eine Verschlechterung des Funkkanals und eine Erhöhung der Interferenz durch Nachbarzellen erfährt.

Zur Entscheidung darüber, ob für eine Teilnehmerstation OFDMA oder IFDMA einzusetzen ist, werden vorteilhafterweise Schwellenwerte verwendet. Zuvor wird entschieden, welche Messungen zur Entscheidung über das zu verwendende Übertragungsverfahren herangezogen werden sollen. Im Anschluss werden für die Messergebnisse bzw. für aus den Messergebnissen berechnete Größen Schwellenwerte festgelegt, mit welchen die Messergebnisse bzw. die aus den Messergebnissen berechnete(n) Größe(n) verglichen werden. Das Über- oder Unterschreiten der Schwellenwerte stellt das Entscheidungskriterium in Bezug auf das zu verwendende Übertragungsverfahren dar.

Alternativ oder zusätzlich zur Verwendung von Schwellenwerten können die für die Entscheidung zwischen den Übertragungsverfahren relevanten Messergebnisse der verschiedenen Teilnehmerstationen sortiert werden. Die Teilnehmerstationen werden hierdurch in eine Reihenfolge gebracht, und gemäß dieser Reihenfolge kann die Entscheidung über das zu verwendende Übertragungsverfahren getroffen werden. Ist beispielsweise die Interferenz von Nachbarzellen das entscheidende Kriterium zur Entscheidung über OFDMA oder IFDMA, wird zuerst für die von der Interferenz am stärksten betroffenen Teilnehmerstationen die Entscheidung über OFDMA oder IFDMA getroffen und die entsprechenden OFDMA- oder IFDMA-Subträger zugewiesen, so dass die Situation, dass für diese Teilnehmerstationen keine Funkressourcen des hinsichtlich der Interferenz geeigneteren Übertragungsverfahrens verfügbar sind, nicht auftritt.

Es ist vorteilhaft, wenn für diejenigen Subträger, welche für die Kommunikation von Teilnehmerstationen am Rande einer Funkzelle eingesetzt werden, ein anderer Frequenzwiederholabstand verwendet wird als für diejenigen Subträger, welche für die Kommunikation von Teilnehmerstationen in der übrigen Funkzelle eingesetzt werden. Bestimmt man, wie oben beschrieben, die Wechselbedingungen zwischen OFDMA und IFDMA derart, dass für Teilnehmerstationen am Rand der Funkzelle IFDMA und für Teilnehmerstationen in der übrigen Funkzelle OFDMA verwendet wird, so sind mit den beiden Übertragungsverfahren OFDMA und IFDMA unterschiedliche Frequenzwiederholabstände verbunden.

Im Beispiel der Figur 2 kann für die OFDMA-Subträger ein Frequenzwiederholabstand von 1 verwendet werden, d.h. benachbarte Basisstationen verwenden die gleichen Subträger zur Kommunikation über OFDMA. Für die IFDMA-Subträger sollte ein größerer Frequenzwiederholabstand gewählt werden, da diese Subträger am Rande der Zellen zum Einsatz kommen. Auf diese Weise können die IFDMA-Subträger unter den Basisstationen aufgeteilt werden, ohne dass direkt benachbarte Basisstationen die gleichen IFDMA-Subträger verwenden. Bei idealisiert hexagonalen Funkzellen können die Subträger 1, 9, 17 und 25 der Figur 2 von einer ersten Gruppe von Basisstationen für IFDMA verwendet werden, die Subträger 2, 10, 18 und 26 von einer zweiten Gruppe von Basisstationen, und die Subträger 3, 11, 19 und 27 von einer dritten Gruppe von Basisstationen, wobei alle Basisstationen einer Gruppe nicht direkt benachbart sind. Dies entspricht einem Frequenzwiederholabstand von 3 für die IFDMA-Subträger. Die Kombination von IFDMA mit einem großen Frequenzwiederholabstand und OFDMA mit einem kleinen Frequenzwiederholabstand bietet sich an, da bei Verwendung von IFDMA mit einem kleinen Frequenzwiederholabstand deutliche Einbußen der Übertragungsqualität am Zellenrand zu verzeichnen wären. Dieses Problem tritt bei OFDMA insbesondere bei "random tone hopping" nicht auf. Andererseits liegt bei IFDMA ein niedriges peak-zu-average-Verhältnis vor, so dass der Einsatz von IFDMA am Zellenrand lohnend ist.

Eine Abschätzung hinsichtlich des Kapazitätsgewinns durch die Verwendung eines größeren Frequenzwiederholabstands für manche Subträger kann gemäß Shannons Formel erfolgen. Hierbei wird berücksichtigt, dass bei einem kleineren Frequenzwiederholabstands zwar pro Zelle eine größere Bandbreite zur Verfügung steht, die Kapazität jedoch durch gesteigerte Interferenz reduziert wird.

Als Beispiel für die Aufteilung der Subträger in OFDMA-Subträger und IFDMA-Subträger wird ein 10 MHz breites Frequenzband betrachtet, welches in 384 äquidistante Subträger aufgeteilt ist. Die maximale Anzahl an Subträgern, welche einer Teilnehmerstation für IFDMA zuweisbar sind, betrage 32. Gemäß 384÷32 =12 beträgt der Frequenzabstand zwischen den IFDMA-Subträgern bei maximaler IFDMA-Datenrate 12 Subträger. Werden 50% der Subträger für OFDMA eingesetzt und 50% für IFDMA, so stehen jeweils 192 Subträger für OFDMA und IFDMA zur Verfügung. Dies bedeutet, da 192÷32=6, dass in einer Funkzelle gleichzeitig zumindest 6 Teilnehmerstationen jeweils 32 IFDMA-Subträger zugewiesen werden können. Wird für die IFDMA-Subträger ein Frequenzwiederholabstand von 3 eingesetzt, so stehen einer Basisstation lediglich 192÷3=64 IFDMA-Subträger zur Verfügung. Die Subträger des Frequenzbandes können folgendermaßen den Übertragungsverfahren und Funkzellen zugeordnet werden: es folgen 6 IFDMA-Subträger direkt aufeinander, wobei die betrachtete Zelle z.B. den ersten und den zweiten dieser IFDMA-Subträger nutzt, darauf folgen 6 OFDMA-Subträger, welche jede Zelle für OFDMA nutzt, darauf folgen wieder 6 IFDMA-Subträger direkt aufeinander, wobei die betrachtete Zelle wieder den ersten und den zweiten dieser IFDMA-Subträger nutzt, darauf folgen 6 OFDMA-Subträger, welche jede Zelle für OFDMA nutzt, usw.

Die beiden Übertragungsverfahren OFDMA und IFDMA können jeweils mit weiteren Verfahren zur Teilnehmerseparierung, wie z.B. räumlich gerichtete Abstrahlung und/oder Verwendung von teilnehmerspezifischen Kodes, kombiniert werden. Bei IFDMA ist dies besonders von Vorteil, da einer Teilnehmerstation bei IFDMA eine Mindestanzahl an Subträgern zugewiesen werden sollte, um die Vorteile von IFDMA zum Tragen kommen zu lassen. Durch die Verwendung von Kodes kann ein hohe Datenrate, welche aus einer hohen Mindestanzahl von Subträgern resultiert, reduziert werden. Auf diese Weise wird eine größere Granularität der Funkressourcen bei IFDMA eingeführt.

Existieren Teilnehmerstationen, für welche aufgrund der Messungen keine eindeutige Entscheidung zugunsten eines der Übertragungsverfahren OFDMA oder IFDMA gefällt werden kann, so kann für diese Teilnehmerstationen eine Kombination zwischen den Übertragungsverfahren OFDMA und IFDMA durchgeführt werden. Eine solche Kombination kann z.B. darin bestehen, dass einer Teilnehmerstation Subträger zugewiesen werden, welche für OFDMA verwendet werden, und weiterhin Subträger zugewiesen werden, welche für IFDMA verwendet werden. Diese Subträger bzw. die mit ihnen verknüpften Übertragungsverfahren können gleichzeitig oder nacheinander angewendet werden. Dieses Vorgehen weist den im folgenden beschriebenen Vorteil auf: Teilnehmerstationen, welche sich im Zellrandbereich befinden, erleiden starke Störungen, wenn in einer benachbarten Zelle die ihnen zugewiesenen Subträger verwendet werden. Durch eine Zuweisung von Subträgern, welche in der Nachbarzelle nicht verwendet werden, erreicht man, dass diese Störungen deutlich reduziert werden. Teilnehmerstationen hingegen, welche sich in einem Zwischenbereich zwischen dem Zellrand und der näheren Umgebung der Basisstation befinden, erleiden schwächere Störungen durch die Nachbarzelle. Die Zuweisung von nicht in der Nachbarzelle verwendeten Subträgern an diese Teilnehmerstationen führt zwar auch bei diesen Teilnehmerstationen zu einer gesteigerten Übertragungsqualität, allerdings ist es möglich, dass die Übertragungsbedingungen hierdurch besser werden, als es erforderlich wäre. Weist man diesen Teilnehmerstationen beispielsweise 50% nicht-exklusive Subträger zu, d.h. Subträger, welche auch in der Nachbarzelle verwendet werden, und 50% exklusive Subträger, d.h. Subträger, welche in der Nachbarzelle nicht verwendet werden, so wird nur die Hälfte der der Teilnehmerstation zugewiesenen Subträger durch Interferenz der Nachbarzelle beeinträchtigt. Somit ist die Störung im Durchschnitt halbiert. Die Funkressourcen werden sparsam eingesetzt, die die Teilnehmerstationen im Zwischenbereich nur teilweise exklusiv in der eigenen Funkzelle verwendete Funkressourcen belegen. Hierdurch ist es möglich, einer größeren Anzahl an Teilnehmerstationen bezüglich der Übertragungsqualität akzeptable Subträger zuzuweisen. Vorteilhafterweise werden den Teilnehmerstationen umso mehr exklusiv in der eigenen Funkzelle verwendete Funkressourcen zugewiesen, je näher sie sich am Zellenrand befinden, bzw. je größer der Interferenzeinfluss der Nachbarzelle ist. Die Verwendung der exklusiven und nichtexklusiven Subträger durch die Teilnehmerstationen kann hierbei gleichzeitig oder im Zeitmultiplex erfolgen.

Die in einer Zelle für die beiden Übertragungsverfahren OFDMA und IFDMA eingesetzten Subträger können mit der Zeit geändert werden. Wird beispielsweise ermittelt, dass die Übertragungsbedingungen für eine Vielzahl von Teilnehmerstationen bei der Verwendung von IFDMA günstiger sind als bei der Verwendung von OFDMA, so können Subträger, welche zuvor für OFDMA eingesetzt wurden, für IFDMA eingesetzt werden. Die Entscheidung darüber, welche Subträger OFDMA bzw. IFDMA zugeordnet werden, kann von der jeweiligen Basisstation oder von einer zentralen Einrichtung, wie beispielsweise bei UMTS von einem RNC (Radio Network Controller), getroffen werden. Auf diese Weise kann ein Lastausgleich (englisch: load balancing) zwischen z.B. Teilnehmerstationen am Rand einer Funkzelle und Teilnehmerstationen im Zentrum der Funkzelle erzielt werden.

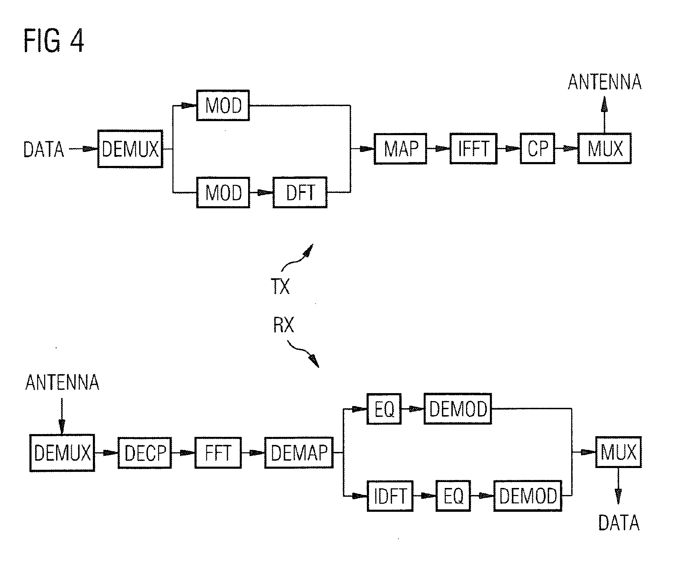

Figur 4 zeigt im oberen Teil schematisch den Aufbau eines Senders TX zur Umschaltung zwischen OFDMA und IFDMA, sowie im unteren Teil schematisch den Aufbau eines Empfängers RX zur Umschaltung zwischen OFDMA und IFDMA. Bei dem Sender TX werden zu versendende Bits DATA in dem Bestandteil DEMUX gedemultiplext, d.h. der zeitlich serielle Datenstrom von Bits wird aufgeteilt in parallele Blöcke, welche jeweils blockweise in weiteren Bestandteilen verarbeitet werden. Dabei gelangt ein Block von Informationsbits bei Verwendung von OFDMA in den auf den Bestandteil DEMUX folgenden oberen Zweig und bei Verwendung von IFDMA in den auf den Bestandteil DEMUX folgenden unteren der beiden Zweige. In beiden Zweigen erfolgt in dem Bestandteil MOD eine Modulation, bei welcher durch Zusammenfassung von Bits Symbole gebildet werden. Im IFDMA-Zweig findet nach der Symbolbildung in dem Bestandteil DFT eine diskrete Fouriertransformation in den Frequenzbereich statt. In dem Bestandteil MAP wird jeder Block von Symbolen einem Subträger zugeordnet, die anderen Subträger werden zu Null gesetzt. Im Anschluss wird in dem Bestandteil IFFT eine inverse Fouriertransformation der Symbolfolge in den Zeitbereich durchgeführt. Der folgende Bestandteil CP fügt zyklische Präfixe hinzu. Der Bestandteil MUX führt eine Umwandlung der Blöcke in serielle Daten durch, bevor eine Versendung durch die Antenne ANTENNA erfolgt.

Vor der Versendung durch die Antenne ANTENNA erfolgt eine Verstärkung. Es kann für OFDMA und IFDMA der gleiche Verstärker eingesetzt werden.

Der Empfänger RX empfängt über die Antenne ANTENNA ein serielles Basisbandsignal, welches in dem Bestandteil DEMUX einer seriell-zu-parallel-Umwandlung unterzogen wird. Der Bestandteil DECP entfernt die zyklischen Präfixe. Nach der Fouriertransformation in den Frequenzbereich in dem Bestandteil FFT werden die Informationen der verschiedenen Subträger in dem Bestandteil DEMAP in Blöcke umgesetzt. Blöcke gelangen bei Verwendung von OFDMA in den auf den Bestandteil FFT folgenden oberen Zweig und bei Verwendung von IFDMA in den auf den Bestandteil FFT folgenden unteren der beiden Zweige. In jedem der beiden Zweige befindet sich ein eigener Entzerrer (englisch: equaliser) EQ, da der Entzerrer für die OFDMA-Verarbeitung in der Regel einfacher ausgestaltet ist als für die IFDMA-Verarbeitung. Vor der Entzerrung findet für die IFDMA-Symbole eine inverse diskrete Fouriertransformation in dem Bestandteil IDFT statt. In beiden Ästen werden die Symbole in dem Bestandteil DEMOD demoduliert, d.h. in Bits umgesetzt, bevor die IFDMA-Bits und die OFDMA-Bits in dem Bestandteil MUX gemultiplext werden. Die hieraus entstehende Bitfolge DATA wird im Anschluss der Dekodierung zugeführt.

Sind der Sender TX und der Empfänger RX Bestandteil einer Teilnehmerstation, so wird bei einer OFDMA-Kommunikation der obere Zweig und bei einer IFDMA-Kommunikation der untere Zweig verwendet. Empfängt die Teilnehmerstation eine Signalisierungsnachricht, welche sie informiert, dass das Übertragungsverfahren gewechselt wird, erfolgt eine Umschaltung zu dem jeweils anderen Zweig. Erfolgt gleichzeitig die Verwendung von OFDMA auf manchen Subträgern und von IFDMA auf anderen Subträgern, so werden die OFDMA-Symbole und die IFDMA-Symbole in die entsprechenden Zweige eingespeist und gleichzeitig verarbeitet. Entsprechendes gilt auch für eine Basisstation, welche in der Regel gleichzeitig mit manchen Teilnehmerstationen über OFDMA und mit anderen Teilnehmerstationen über IFDMA kommuniziert.

Die Erfindung wurde in Bezug auf die Verwendung der beiden Übertragungsverfahren OFDMA und IFDMA erläutert. Alternativ können an Stelle von OFDMA und/oder IFDMA auch andere FDMA-Übertragungsverfahren zum Einsatz kommen. Weiterhin kann IFDMA mit einem Subträgerabstand von 1 zum Einsatz kommen, entsprechend einem Einzelträger-Verfahren (englisch: single carrier). Alternativ zur Verwendung von IFDMA am Zellenrand kann auch ein Subträger-Sprungverfahren am Zellenrand verwendet werden, da hierdurch die Interferenz bzgl. der Nachbarzelle reduziert werden kann.

## Patentansprüche

1. Verfahren zur Kommunikation per Funk,
bei welchem zur Kommunikation ein in eine Mehrzahl von Subträgern (1...32) aufgeteiltes Frequenzband (F) verwendet wird,
bei welchem Nachrichten von einer Basisstation (BS) zu einer Teilnehmerstation (MS1, MS2, MS) und/oder von der Teilnehmerstation (MS1, MS2, MS) zu der Basisstation (BS) gesendet werden,
wobei Nachrichten zeitweise unter Verwendung eines ersten FDMA-Verfahrens und zeitweise unter Verwendung eines zweiten FDMA-Verfahrens verarbeitet werden.

2. Verfahren nach Anspruch 1, wobei die beiden FDMA-Verfahren für die Kommunikation zwischen der Basisstation (BS) und der Teilnehmerstation (MS1, MS2, MS) nicht gleichzeitig eingesetzt werden.

3. Verfahren nach Anspruch 1, wobei die beiden FDMA-Verfahren für die Kommunikation zwischen der Basisstation (BS) und der Teilnehmerstation (MS1, MS2, MS) zeitweise gleichzeitig eingesetzt werden.

4. Verfahren nach einem der Ansprüche 1 bis 3, bei dem die Basisstation (BS) der Teilnehmerstation (MS1, MS2, MS) Signalisierungsinformationen (CHANGE TO OFDMA, CHANGE TO IFDMA) sendet als Aufforderung zum Wechsel von dem ersten FDMA-Verfahren zu dem zweiten FDMA-Verfahren oder von dem zweiten FDMA-Verfahren zu dem ersten FDMA-Verfahren.

5. Verfahren nach einem der Ansprüche 1 bis 4, bei dem eine Entscheidung über die Verwendung des ersten oder des zweiten FDMA-Verfahrens unter Verwendung von mindestens einem Messergebnis getroffen wird.

6. Verfahren nach Anspruch 5, bei dem
das mindestens eine Messergebnis betrifft:
- eine Funkkanalqualität betreffend mindestens einen Subträger (1...32), und/oder
- ein Peak-zu-Average-Verhältnis der Teilnehmerstation (MS1, MS2, MS), und/oder
- eine Interferenzsituation der Teilnehmerstation (MS1, MS2, MS), und/oder
- einen Aufenthaltsort der Teilnehmerstation (MS1, MS2, MS).

7. Verfahren nach einem der Ansprüche 1 bis 6, bei dem von der Basisstation (BS) zur Kommunikation mit Teilnehmerstationen (MS1, MS2, MS) für das erste FDMA-Verfahren ein erster Teil der Subträger (1...32) und für das zweite FDMA-Verfahren ein zweiter mit dem ersten Teil nicht überlappender Teil der Subträger (1...32) des Frequenzbandes (F) verwendet wird,
wobei der erste Teil mehrere im Frequenzbereich äquidistante aus der gleichen Anzahl von Subträgern (1...32) bestehende Blöcke von Subträgern (1...32) umfasst.

8. Verfahren nach einem der Ansprüche 1 bis 7, bei dem von der Basisstation (BS) zur Kommunikation mit Teilnehmerstationen (MS1, MS2, MS) ein erster Teil der Subträger (1...32) und ein zweiter mit dem ersten Teil nicht überlappender Teil der Subträger (1...32) des Frequenzbandes (F) verwendet wird, und
von einer zu der Basisstation (BS) benachbarten Basisstation (BS) zur Kommunikation mit Teilnehmerstationen zumindest manche der Subträger (1...32) des ersten Teils und ein dritter mit dem ersten und dem zweiten Teil nicht überlappender Teil der Subträger (1...32) des Frequenzbandes (F) verwendet wird.

9. Verfahren nach Anspruch 8, bei dem von der Basisstation (BS) zur Kommunikation mit Teilnehmerstationen (MS1, MS2, MS) für das erste FDMA-Verfahren der erste Teil der Subträger (1...32) und für das zweite FDMA-Verfahren der zweite Teil der Subträger (1...32) des Frequenzbandes (F) verwendet wird, und
von der zu der Basisstation (BS) benachbarten Basisstation (BS) zur Kommunikation mit Teilnehmerstationen für das erste FDMA-Verfahren zumindest manche der Subträger (1...32) des ersten Teils und für das zweite FDMA-Verfahren der dritte Teil der Subträger (1...32) des Frequenzbandes (F) verwendet wird.

10. Sender (BS, MS1, MS2, MS; TX) für ein Funkkommunikationssystem,
wobei in dem Funkkommunikationssystem zur Kommunikation ein in eine Mehrzahl von Subträgern (1...32) aufgeteiltes Frequenzband (F) verwendet wird, mit
Mitteln zum Verarbeiten von ersten zu versendenden Nachrichten unter Verwendung eines ersten FDMA-Verfahrens und zum Verarbeiten von zweiten zu versendenden Nachrichten unter Verwendung eines zweiten FDMA-Verfahrens, wobei die Verarbeitung der ersten Nachrichten unter Verwendung des ersten FDMA-Verfahrens gleichzeitig zu oder vor oder nach der Verarbeitung der zweiten Nachrichten unter Verwendung des zweiten FDMA-Verfahrens erfolgt,
Mitteln zum Versenden der unter Verwendung des ersten FDMA-Verfahrens und/oder des zweiten FDMA-Verfahren verarbeiteten Nachrichten an einen Empfänger (BS, MS1, MS2, MS; RX).

11. Empfänger (BS, MS1, MS2, MS; RX) für ein Funkkommunikationssystem,
wobei in dem Funkkommunikationssystem zur Kommunikation ein in eine Mehrzahl von Subträgern (1...32) aufgeteiltes Frequenzband (F) verwendet wird, mit
Mitteln zum Empfangen von Nachrichten von einem Sender (BS, MS1, MS2, MS; TX),
Mitteln zum Verarbeiten von ersten empfangenen Nachrichten unter Verwendung eines ersten FDMA-Verfahrens und zum Verarbeiten von zweiten empfangenen Nachrichten unter Verwendung eines zweiten FDMA-Verfahrens, wobei die Verarbeitung der ersten Nachrichten unter Verwendung des ersten FDMA-Verfahrens gleichzeitig zu oder vor oder nach der Verarbeitung der zweiten Nachrichten unter Verwendung des zweiten FDMA-Verfahrens erfolgt.

## Claims

1. Method for communicating by radio, in which a frequency band (F) divided into a plurality of subcarriers (1...32) is used for the communication,
in which messages are transmitted from a base station (BS) to a subscriber station (MS1, MS2, MS), and/or from the subscriber station (MS1, MS2, MS) to the base station (BS),
wherein messages are processed from time to time by using a first FDMA method and from time to time by using a second FDMA method.

2. Method according to Claim 1, wherein the two FDMA methods are not simultaneously used for the communication between the base station (BS) and the subscriber station (MS1, MS2, MS).

3. Method according to Claim 1, wherein the two FDMA methods are simultaneously used from time to time for the communication between the base station (BS) and the subscriber station (MS1, MS2, MS).

4. Method according to one of Claims 1 to 3 in which the base station (BS) transmits to the subscriber station (MS1, MS2, MS) signalling information (CHANGE TO OFDMA, CHANGE TO IFDMA) as a request for changing from the first FDMA method to the second FDMA method or from the second FDMA method to the first FDMA method.

5. Method according to one of Claims 1 to 4, in which a decision about using the first or the second FDMA method is made by using at least one measurement result.

6. Method according to Claim 5, in which the at least one measurement result relates to:
- a radio channel quality concerning at least one subcarrier (1...32), and/or
- a peak-to-average ratio of the subscriber station (MS1, MS2, MS), and/or
- an interference situation of the subscriber station (MS1, MS2, MS), and/or
- a location of the subscriber station (MS1, MS2, MS).

7. Method according to one of Claims 1 to 6, in which a first part of the subcarriers (1...32) is used by the base station (BS) for the communication with subscriber stations (MS1, MS2, MS) for the first FDMA method and a second part, not overlapping the first part, of the subcarriers (1...32) of the frequency band (F) is used for the second FDMA method,
wherein the first part comprises a number of blocks of subcarriers (1...32), which are equidistance in the frequency domain and consist of the same number of subcarriers (1...32).

8. Method according to one of Claims 1 to 7, in which the base station (BS) uses for the communication the subscriber stations (MS1, MS2, MS) a first part of the subcarriers (1...32) and a second part, not overlapping the first part, of the subcarriers (1...32) of the frequency band (F), and a base station (BS) adjacent to the base station (BS) uses, for the communication with subscriber stations, at least some of the subcarriers (1...32) of the first part and a third part, not overlapping the first and the second part, of the subcarriers (1...32) of the frequency band (F).

9. Method according to Claim 8, in which the base station (BS) uses for the communication with subscriber stations (MS1, MS2, MS) the first part of the subcarriers (1...32) for the first FDMA method and the second part of the subcarriers (1...32) of the frequency band (F) for the second FDMA method, and
the base station (BS) adjacent to the base station (BS) uses for the communication with subscriber stations at least some of the subcarriers (1...32) of the first part for the first FDMA method and the third part of the subcarriers (1...32) of the frequency band (F) for the second FDMA method.

10. Transmitter (BS, MS1, MS2, MS; TX) for a radio communication system, wherein in the radio communication system, a frequency band (F) divided into a plurality of subcarriers (1...32) is used, comprising
means for processing first messages to be sent out by using a first FDMA method and for processing second messages to be sent out by using a second FDMA method, the processing of the first messages by using the first FDMA method taking place simultaneously with or before or after the processing of the second messages by using the second FDMA method,
means for sending out the messages, process by using the first FDMA method and/or the second FDMA method, to a receiver (BS, MS1, MS2, MS; RX).

11. Receiver (BS, MS1, MS2, MS; RX) for a radio communication system, wherein a frequency band (F) divided into a plurality of subcarriers (1...32) is used for the communication in the radio communication system, comprising
means for receiving messages from a transmitter (BS, MS1, MS2, MS; TX),
means for processing first received messages by using a first FDMA method and for processing second received messages by using a second FDMA method, the processing of the first messages by using the first FDMA method taking place simultaneously with or before or after the processing of the second messages by using the second FDMA method.

## Revendications

1. Procédé de radiocommunication, dans lequel est utilisée, aux fins de la communication, une bande de fréquences (F) subdivisée en une pluralité de sous-porteuses (1 1 ... 32),
dans lequel des messages sont envoyés d'une station de base (BS) à une station d'usager (MS1, MS2, MS) et/ou de la station d'usager (MS1, MS2, MS) à la station de base (BS), des messages étant traités temporairement moyennant l'utilisation d'un premier procédé FDMA et temporairement moyennant l'utilisation d'un deuxième procédé FDMA.

2. Procédé selon la revendication 1, les deux procédés FDMA n'étant pas utilisés simultanément pour la communication entre la station de base (BS) et la station d'usager (MS1, MS2, MS).

3. Procédé selon la revendication 1, les deux procédés FDMA étant utilisés temporairement de manière simultanée pour la communication entre la station de base (BS) et la station d'usager (MS1, MS2, MS).

4. Procédé selon l'une des revendications 1 à 3, dans lequel la station de base (BS) envoie à la station d'usager (MS1, MS2, MS) des informations de signalisation (CHANGE TO OFDMA, CHANGE TO IFDMA) en tant qu'invitation à passer du premier procédé FDMA au deuxième procédé FDMA ou du deuxième procédé FDMA au premier procédé FDMA.

5. Procédé selon l'une des revendications 1 à 4, dans lequel une décision sur l'utilisation du premier ou du deuxième procédé FDMA est prise en utilisant au moins un résultat de mesure.

6. Procédé selon la revendication 5, dans lequel l'au moins un résultat de mesure concerne:
- une qualité de canal radio concernant au moins une sous-porteuse (1 ... 32) et/ou
- un rapport crête sur moyenne de la station d'usager (MS1, MS2, MS) et/ou
- une situation d'interférence de la station d'usager (MS1, MS2, MS) et/ou
- une localisation de la station d'usager (MS1, MS2, MS).

7. Procédé selon l'une des revendications 1 à 6, dans lequel la station de base (BS), aux fins de la communication avec des stations d'usagers (MS1, MS2, MS), utilise une première partie des sous-porteuses (1 ... 32) pour le premier procédé FDMA et une deuxième partie des sous-porteuses (1 ... 32) de la bande de fréquences (F), non en chevauchement avec la première partie, pour le deuxième procédé FDMA, la première partie comportant plusieurs blocs de sous-porteuses (1 ... 32) équidistants en plage de fréquences et composés du même nombre de sous-porteuses (1 ... 32) .

8. Procédé selon l'une des revendications 1 à 7, dans lequel la station de base (BS), aux fins de la communication avec des stations d'usagers (MS1, MS2, MS), utilise une première partie des sous-porteuses (1 ... 32) et une deuxième partie des sous-porteuses (1 ... 32) de la bande de fréquences (F) non en chevauchement avec la première partie et une station de base (BS) voisine de la station de base (BS), aux fins de la communication avec des stations d'usagers, utilise au moins certaines des sous-porteuses (1 ... 32) de la première partie et une troisième partie des sous-porteuses (1 ... 32) de la bande de fréquences (F) non en chevauchement avec les première et deuxième parties.

9. Procédé selon la revendication 8, dans lequel la station de base (BS), aux fins de la communication avec des stations d'usagers (MS1, MS2, MS), utilise la première partie des sous-porteuses (1 ... 32) pour le premier procédé FDMA et la deuxième partie des sous-porteuses (1 ... 32) de la bande de fréquences (F) pour le deuxième procédé FDMA et la station de base (BS) voisine de la station de base (BS), aux fins de la communication avec des stations d'usagers, utilise au moins certaines des sous-porteuses (1 ... 32) de la première partie pour le premier procédé FDMA et la troisième partie des sous-porteuses (1 ... 32) de la bande de fréquences (F) pour le deuxième procédé FDMA.

10. Émetteur (BS, MS1, MS2, MS; TX) pour un système de radiocommunication, une bande de fréquences (F) subdivisée en une pluralité de sous-porteuses (1 ... 32) étant utilisée dans le système de radiocommunication aux fins de la communication, comportant des moyens pour traiter des premiers messages à émettre en utilisant un premier procédé FDMA et pour traiter des deuxièmes messages à émettre en utilisant un deuxième procédé FDMA, le traitement des premiers messages avec utilisation du premier procédé FDMA ayant lieu en même temps que, avant ou après le traitement des deuxièmes messages avec utilisation du deuxième procédé FDMA, ainsi que des moyens pour envoyer à un récepteur (BS, MS1, MS2, MS; RX) les messages traités moyennant l'utilisation du premier procédé FDMA et/ou du deuxième procédé FDMA.

11. Récepteur (BS, MS1, MS2, MS; RX) pour un système de radiocommunication, une bande de fréquences (F) subdivisée en une pluralité de sous-porteuses (1 ... 32) étant utilisée dans le système de radiocommunication aux fins de la communication, comportant des moyens pour recevoir des messages d'un émetteur (BS, MS1, MS2, MS; TX) ainsi que des moyens pour traiter des premiers messages reçus en utilisant un premier procédé FDMA et pour traiter des deuxièmes messages reçus en utilisant un deuxième procédé FDMA, le traitement des premiers messages avec utilisation du premier procédé FDMA ayant lieu en même temps que, avant ou après le traitement des deuxièmes messages avec utilisation du deuxième procédé FDMA.
